# EUROPÄISCHE PATENTSCHRIFT

(11) **EP 4 380 076 B1**
(45) Veröffentlichungstag und Bekanntmachung des Hinweises auf die Patenterteilung: **07.05.2025**
(21) Anmeldenummer: 23210231.9
(22) Anmeldetag: 16.11.2023
(51) Int. Cl.: H04B 10/532, H04B 10/556, G02F 1/01

(54) **POLARISATIONSMODULATOR MIT GETRENNTEN OPTISCHEN TEILSTRECKEN**
POLARIZATION MODULATOR WITH SEPARATE OPTICAL SUB-PATHS
MODULATEUR DE POLARISATION A TRAJETS OPTIQUES SEPAREES

(30) Priorität: 29.11.2022 DE 102022131465
(43) Veröffentlichungstag der Anmeldung: 05.06.2024
(73) Patentinhaber: Tesat Spacecom GmbH & Co. KG, 71522 Backnang (DE)
(72) Erfinder: EUL, Silas, 71522 Backnang (DE); STRUCK, Julian, 71522 Backnang (DE)
(74) Vertreter: LKGLOBAL Lorenz & Kopf Patentanwalt Attorney at Law PartG mbB

(56) Entgegenhaltungen:
- EP-A2- 1 330 054
- US-B1- 7 643 760
- X. LIU, C. LIAO ET AL.: "Polarization coding and decoding by phase modulation in polarizing Sagnac interferometers", PROC. SPIE, vol. 6827, 26 November 2007 (2007-11-26), pages 68270I-1 - 68270I-1, XP040249795
- COSTANTINO AGNESI ET AL: "All-fiber self-compensating polarization encoder for Quantum Key Distribution", ARXIV.ORG, CORNELL UNIVERSITY LIBRARY, 201 OLIN LIBRARY CORNELL UNIVERSITY ITHACA, NY 14853, 2 March 2019 (2019-03-02), XP081125155

## Beschreibung

### Technisches Gebiet

Die vorliegende Beschreibung betrifft optische Signalerzeugung und Signalübertragung, insbesondere die Übertragung von Informationen mittels Polarisationsmodulation. Im Speziellen betrifft die Beschreibung eine Modulatoreinheit zum Modulieren der Polarisation eines optischen Signals, eine optische Signalübertragungsstrecke mit einer solchen Modulatoreinheit, und ein System mit einer solchen Modulatoreinheit, beispielsweise in Form eines Satelliten.

### Technischer Hintergrund

Informationen können mit technischen Mitteln übertragen werden, indem eine Informationseinheit einem bestimmten Zustand eines Trägersignals zugewiesen wird. Das Trägersignal ist üblicherweise eine elektromagnetische Welle aus einem spezifischen spektralen Bereich. Um nun eine Information auf das Trägersignal aufzuprägen, wird eine Eigenschaft des Trägersignals geändert. Die Änderung an sich oder der Zustand des Trägersignals nach der Änderung entsprechen dabei der zu übertragenden Information. Üblicherweise wird das Trägersignal in zeitlichen Abständen geändert, um hierdurch mehrere Informationseinheiten zu übertragen.

Als Informationsträger kommen je nach Trägersignal verschiedene physikalische Merkmale des Trägersignals in Frage, beispielsweise: die Amplitude, die Frequenz, die Phase und/oder die Polarisation. Wird eines dieser Merkmale über der Zeit verändert, so wird dieser Vorgang als Modulation bezeichnet.

Auf dem Signalverarbeitungspfad kommen verschiedene technische Komponenten zum Einsatz, um das Trägersignal zu bearbeiten und die gewünschte Information in das Trägersignal einzubringen, bevor das Trägersignal über die Übertragungsstrecke (leitungsgebunden oder leitungslos) übertragen wird.

Die bei der Vorbereitung und Bearbeitung des Trägersignals verwendeten Komponenten dienen dazu, das Trägersignal entsprechend zu modulieren, damit die zu übertragende Information richtig auf das Trägersignal aufgebracht wird und mit möglichst wenig Störungen und Verlusten über die Übertragungsstrecke übertragen wird.

Nun kann es aber vorkommen, dass neben der gewollten Modulation (Veränderung des Trägersignals) auch ungewollte Veränderungen des Trägersignals erfolgen, beispielsweise durch parasitäre Effekte oder andere ungewollte Eigenschaften der in die Vorbereitung des Trägersignals involvierten Komponenten. In dem Fall ist es bei einem Empfänger des Trägersignals nicht immer erkennbar, welche Veränderung des Trägersignals auf der gewollten Modulation basiert und welche Veränderung von ungewollten Effekten hervorgerufen wurde. Dadurch kann die Güte des Signals negativ beeinflusst werden.

Jedes der folgenden Nicht-Patentdokumente offenbart einen Polarisationsmodulator auf der Grundlage einer Sagnac-Schleife mit einem Phasenmodulator und einem Faraday-Rotator-Spiegel:
X. LIU, C. LIAO ET AL.: "Polarization coding and decoding by phase modulation in polarizing Sagnac interferometers", PROC. SPIE, Bd. 6827, 26. November 2007 (2007-11-26), Seiten 682701-1-682701-1

COSTANTINO AGNESI ET AL: "All-fiber self-compensating polarization encoder for Quantum Key Distribution", ARXIV.ORG, CORNELL UNIVERSITY LIBRARY, 201 OLIN LIBRARY CORNELL UNIVERSITY ITHACA, NY 14853, 2. März 2019 (2019-03-02)

### Beschreibung

Ausgehend davon kann es als Aufgabe betrachtet werden, den Einfluss von ungewollten Effekten einer Modulatoreinheit auf ein zur Übertragung moduliertes Trägersignal zu reduzieren oder zu eliminieren. Es kann insbesondere als Aufgabe betrachtet werden, Polarisationsfehler bei einem polarisationsmodulierten optischen Signal zu vermeiden.

Diese Aufgabe wird gelöst durch den Gegenstand des unabhängigen Anspruchs.

Weitere Ausführungsformen ergeben sich aus den abhängigen Ansprüchen sowie aus der folgenden Beschreibung.

Gemäß einem Aspekt ist eine Modulatoreinheit zum Modulieren der Polarisation eines optischen Signals angegeben. Die Modulatoreinheit weist eine Lichtquelle, einen Polarisationskomponentenseparator, einen Phasenmodulator (der insbesondere ein polarisationsabhängiger Phasenmodulator ist, aber auch ein polarisationsunabhängiger Phasenmodulator sein kann), und einen Reflektor auf. Die Lichtquelle ist ausgestaltet, ein optisches Signal auszugeben und als Eingangssignal in Richtung des Polarisationskomponentenseparators zu emittieren, wobei das optische Signal eine erste Polarisationskomponente mit einer ersten Polarisationsrichtung und eine zweite Polarisationskomponente mit einer zweiten Polarisationsrichtung enthält. Der Polarisationskomponentenseparator ist ausgestaltet, die erste Polarisationskomponente von der zweiten Polarisationskomponente zu separieren und die erste Polarisationskomponente über eine erste optische Teilstrecke und die zweite Polarisationskomponente über eine zweite optische Teilstrecke zu übertragen. Der ersten optischen Teilstrecke ist eine erste Signallaufzeit zugeordnet und der zweiten optischen Teilstrecke ist eine zweite Signallaufzeit zugeordnet, wobei die erste Signallaufzeit sich von der zweiten Signallaufzeit unterscheidet, d.h., dass die erste Signallaufzeit größer oder kleiner als die zweite Signallaufzeit ist. Der Polarisationskomponentenseparator ist ausgestaltet, als Ergebnis des Unterschieds zwischen der ersten Signallaufzeit und der zweiten Signallaufzeit, einen zeitlichen Versatz zwischen die erste Polarisationskomponente und die zweite Polarisationskomponente einzubringen und die erste Polarisationskomponente und die zweite Polarisationskomponente auf einem gemeinsamen optischen Pfad zu dem Phasenmodulator zu übertragen. Der Phasenmodulator ist ausgestaltet, eine erste Phase der ersten Polarisationskomponente in der ersten Polarisationsrichtung zu modulieren und die modulierte erste Polarisationskomponente an den Reflektor weiterzuleiten. Der Reflektor ist ausgestaltet, sowohl die erste Polarisationskomponente als auch die zweite Polarisationskomponente in Richtung des Phasenmodulators zu retroreflektieren und dabei die jeweilige Polarisation zu verändern (beispielsweise um 90°), so dass die erste Polarisationskomponente mit der ersten Polarisationsrichtung die zweite Polarisationsrichtung erhält und die zweite Polarisationskomponente mit der zweiten Polarisationsrichtung die erste Polarisationsrichtung erhält. Der Phasenmodulator ist ausgestaltet, eine zweite Phase der retroreflektierten zweiten Polarisationskomponente in der ersten Polarisationsrichtung zu modulieren und die retroreflektierte erste Polarisationskomponente und die retroreflektierte zweite Polarisationskomponente an den Polarisationskomponentenseparator zu übertragen. Der Polarisationskomponentenseparator ist ausgestaltet, den zeitlichen Versatz zwischen der retroreflektierten ersten Polarisationskomponente und der retroreflektierten zweiten Polarisationskomponente zu eliminieren und die retroreflektierte erste Polarisationskomponente und die retroreflektierte zweite Polarisationskomponente ohne zeitlichen Versatz über einen gemeinsamen optischen Pfad auszugeben. Die Modulatoreinheit ist ausgestaltet, das so modulierte optische Signal als polarisationsmoduliertes Ausgangssignal auszugeben.

Die erste Polarisationskomponente und die zweite Polarisationskomponente sind beim ersten Passieren des Phasenmodulators zeitlich voneinander getrennt. Daher kann die zweite Polarisationskomponente beim ersten Passieren des Phasenmodulators moduliert werden oder nicht moduliert werden. Anschließend wird dann sowohl die erste Polarisationskomponente als auch die zweite Polarisationskomponente an den Reflektor weitergeleitet.

Das von der Lichtquelle erzeugte und ausgegebene optische Signal stellt grundsätzlich eine Überlagerung aus zwei orthogonalen Polarisationskomponenten dar. Der Phasenmodulator ist ausgestaltet, jeweils eine gewünschte Phase auf beide Polarisationskomponenten aufzubringen.

Grundsätzlich kann die Lichtquelle ein Lichtemitter sein (beispielsweise ein Laser) oder der Ausgang eines lichtführenden Elements. In einem Ausführungsbeispiel durchläuft das optische Signal denselben optischen Pfad der Modulatoreinheit zweimal in entgegengesetzte Richtungen. Beim ersten Durchlauf läuft das optische Signal bzw. seine Polarisationskomponenten von der Lichtquelle durch den Polarisationskomponentenseparator und den Phasenmodulator zu dem Reflektor. Der Reflektor retroreflektiert das optische Signal und dreht die Phase des optischen Signals dabei um 90° (entweder +90° oder -90°). Beispielsweise ist der Reflektor als Faraday-Spiegel implementiert, der ein auf dem Faraday-Effekt beruhender Retroreflektor ist, der einen Kristall enthält, an welchem ein Magnetfeld anliegt und der die Polarisation in Abhängigkeit von der Ausbreitungsrichtung des Magnetfeldes dreht. Wenn beispielsweise horizontal polarisiertes Licht auf den Reflektor trifft, wird dies als vertikal polarisiertes Licht retroreflektiert. Es handelt sich also bei dem Reflektor um die Kombination aus einem Faraday-Rotator und einem Spiegel. Der Faraday-Rotator wird zunächst von dem optischen Signal passiert und die Polarisation des Lichts wird dabei um 45° (+45° oder -45°) gedreht. Dann wird das optische Signal gespiegelt und passiert erneut den Faraday-Rotator, wobei seine Polarisation um weitere 45° (in dieselbe Richtung wie im ersten Schritt) gedreht wird. In Summe unterscheidet sich dann die Polarisation des retroreflektierten Lichts von der Polarisation des einfallenden Lichts um 90°.

Gerade weil das optische Signal bzw. seine Polarisationskomponenten den Phasenmodulator mit getauschten Polarisationsrichtungen und zeitlichem Versatz zwischen den Polarisationskomponenten zweimal durchläuft, wirkt der Phasenmodulator zunächst auf die zu modulierende Polarisationskomponente und die zeitlich verzögerte Polarisationskomponente passiert den Phasenmodulator entweder ohne aktiven Einfluss auf deren Phase oder sie kann auch beim ersten Durchlauf moduliert werden. Bei einem polarisationsabhängigen Phasenmodulator wird die zweite Polarisationskomponente zunächst nicht moduliert (weil die zweite Polarisationskomponente eine andere Polarisationsrichtung hat als die erste Polarisationskomponente), bei einem polarisationsunabhängigen Phasenmodulator hingegen kann auch die zweite Polarisationskomponente beim ersten Durchlauf moduliert werden.

Im Folgenden werden einige Beispiele mit Bezugnahme auf einen polarisationsabhängigen Phasenmodulator beschrieben. Es sollte jedoch verstanden werden, dass das hier beschriebene Prinzip auch mit einem polarisationsunabhängigen Phasenmodulator implementiert werden kann.

Im Ergebnis werden parasitäre Einflüsse der Modulatoreinheit auf die Polarisationskomponenten des optischen Signals und Fehlerphasen eliminiert.

Beim ersten Durchlauf wird beispielsweise die Komponente des optischen Signals mit horizontaler Polarisation (für das Beispiel als erste Polarisationsrichtung angenommen) moduliert (es wird eine erste Phase auf diese Komponente moduliert) und die Komponente mit vertikaler Polarisation (für das Beispiel als zweite Polarisationsrichtung angenommen) passiert den Phasenmodulator, ohne dass Veränderungen an der Phase dieser Komponente vorgenommen werden. Nun wird das optische Signal von dem Reflektor retroreflektiert und die Polarisation um 90° gedreht, die Komponente mit horizontaler Polarisation ist nun vertikal polarisiert, die Komponente mit vertikaler Polarisation ist nun horizontal polarisiert. Beim zweiten Durchlauf durchläuft das optische Signal mit seinen Polarisationskomponenten erneut den Phasenmodulator, und nun wird die (jetzt) horizontal polarisierte Komponente (welche der vertikal polarisierten Komponente des ersten Durchlaufs entspricht) in seiner Phase moduliert und die (jetzt) vertikal polarisierte Komponente passiert den Phasenmodulator ohne weitere Änderung seiner Phase. Dies bedeutet, dass der Phasenmodulator nur eine einzelne Modulationsachse hat, welche für den ersten und zweiten Durchlauf von optischen Signalen gleichbleibt, also auf dieselbe Polarisationsrichtung wirkt.

Wird beim ersten Durchlauf eine Fehlerphase (oder Fehlphasenverschiebung) in das optische Signal eingebracht, indem beispielsweise die Phase der horizontal polarisierten Komponente auf andere Weise als die Phase der vertikal polarisierten Komponente parasitär beeinflusst wird, so hebt sich diese Fehlerphase beim zweiten Durchlauf auf, weil das optische Signal mit einer um 90° gedrehten Polarisation denselben optischen Pfad durchläuft und die gleiche Fehlerphase nun auf die jeweils andere Polarisationsachse aufgetragen wird. Hierdurch werden alle relativen Phasenfehler auf gleiche Weise in beide Polarisationsachsen eingebracht. Außerdem wird durch die zeitliche Verzögerung zwischen den beiden Polarisationskomponenten ein parasitärer Einfluss auf die Polarisationskomponente, die außerhalb der Polarisationsachse des Phasenmodulators liegt, vermieden.

Die Phase, welche auf die horizontal polarisierte Komponente des zweiten Durchlaufs aufgebracht wird, wird als zweite Phase bezeichnet, weil beim zweiten Durchlauf die erste Phase in der vertikal polarisierten Komponente des optischen Signals enthalten ist und die erste Phase gegenüber der zweiten Phase unterschiedlich sein kann.

In dem hier wiedergegeben Beispiel wird in einer bestimmten Weise auf horizontal und vertikal polarisierte Komponenten des optischen Signals Bezug genommen, nämlich dass beim ersten und zweiten Durchlauf durch den Phasenmodulator jeweils die horizontal polarisierte Komponente phasenmoduliert wird. Es versteht sich allerdings, dass dieses Beispiel nicht einschränkend ist und der Phasenmodulator statt der horizontal polarisierten Komponente die vertikal polarisierte Komponente oder eine beliebige andere Komponente des optischen Signals phasenmodulieren kann. Entscheidend ist, dass die Polarisationskomponenten zeitlich zueinander versetzt sind und zwischen den beiden Vorgängen, bei denen die Phase einer Polarisationskomponente des optischen Signals moduliert wird, die Polarisation der beiden Polarisationskomponenten um jeweils 90° gedreht wird.

Im Ergebnis werden bei diesem Aufbau sowohl die vertikal polarisierte Komponente als auch die horizontal polarisierte Komponente des optischen Signals in einer Modulatoreinheit moduliert. Das resultierende optische Signal hat in Summe eine gewünschte Polarisationsmodulation erhalten, indem beim ersten Durchlauf die erste Polarisationskomponente mit einer ersten Polarisationsrichtung und beim zweiten Durchlauf die zweite Polarisationskomponente, welche beim zweiten Durchlauf die erste Polarisationsrichtung hat, in ihrer Phase moduliert werden, wobei jedoch die Polarisation des optischen Signals beim zweiten Durchlauf im Vergleich zum ersten Durchlauf um 90° verändert ist.

Der hier verwendete Phasenmodulator ist beispielsweise ein phasenverändernder Modulator, welcher auf eine Polarisationskomponente eines optischen Signals wirkt, d.h. dass der Phasenmodulator die Phase zweier orthogonal zueinander stehender Polarisationskomponenten des optischen Lichts verändert. Beispielsweise ist der Phasenmodulator ein elektro-optischer Modulator, EOM. Es ist zu verstehen, dass jegliche Bezugnahme auf einen EOM in dieser Beschreibung lediglich beispielhaft erfolgt und grundsätzlich für einen Phasenmodulator gilt, der polarisationsabhängig oder polarisationsunabhängig sein kann.

Beispielsweise hat der Phasenmodulator zwei orthogonal zueinander ausgerichtete optische Achsen. Mittels elektrischer Energie, beispielsweise einer angelegten Spannung entlang einer dieser optischen Achsen (das ist die Polarisationsachse), wird deren Brechungsindex modifiziert und es resultiert eine Phasenveränderung der Polarisationskomponente des optischen Signals gegenüber der anderen bzw. orthogonalen optischen Achse.

Durch die Verwendung eines Faraday-Spiegels ist der Aufbau der Modulatoreinheit sehr platzsparend und kompakt. Ein Phasenmodulator kann sehr schnell geschaltet werden, so dass die hier beschriebene Modulatoreinheit bis in hohe Frequenzbereiche verwendet werden kann, beispielsweise mehrere 10 GHz, wie z.B. bis hin zu 30 bis 40 GHz oder auch höheren Frequenzbereichen.

Mit der hier beschriebenen Modulatoreinheit lassen sich verschiedene Polarisationszustände eines optischen Signals einstellen. Hierbei können beispielsweise verschiedene diskrete Zustände der Polarisation eingestellt werden, indem die Phase der horizontal polarisierten Polarisationskomponente des optischen Signals mit Bezug zu der Phase der vertikal polarisierten Polarisationskomponente des optischen Signals verändert wird. Die Polarisation des optischen Signals kann aber grundsätzlich beliebig kontinuierlich als Linearkombination der beiden Polarisationskomponenten verändert werden, ohne auf eine beschränkte Anzahl von Polarisationszuständen begrenzt zu sein.

Der Polarisationskomponentenseparator trägt dazu bei, dass parasitäre Effekte des Phasenmodulators auf eine nicht modulierte Polarisationskomponente verhindert werden. Grundsätzlich kann ein Phasenmodulator parasitäre oder ungewollte Effekte auch auf optische Signale mit einer solchen Polarisationsrichtung haben, welche außerhalb der Polarisationsachse des Phasenmodulators liegen und welche der Phasenmodulator entsprechend prinzipiell unbeeinflusst passieren lassen sollte.

Somit kann es vorkommen, dass ein polarisationsabhängiger Phasenmodulator, welcher nur horizontal polarisiertes Licht modulieren soll, auch vertikal polarisiertes Licht beeinflusst. Bei Letzterem handelt es sich um einen ungewollten/parasitären Effekt. Dieser Effekt kann jedoch zu Ungenauigkeiten und Fehlern in der Modulation führen. Um diesen Effekt zu eliminieren, wird vorliegend vorgeschlagen, dass ein optisches Signal in Polarisationskomponenten mit unterschiedlicher Polarisationsrichtung aufgeteilt wird, zwischen diese beiden Polarisationskomponenten ein zeitlicher Versatz eingebracht wird, und sie dann nacheinander den Phasenmodulator passieren. Der Phasenmodulator wird so angesteuert, dass er lediglich die Polarisationskomponente moduliert, welche jeweils moduliert werden soll. Beispielsweise wird der Phasenmodulator so angesteuert, dass er eine Modulation aufbringt, wenn horizontal polarisiertes Licht den Phasenmodulator passiert. Wenn hingegen vertikal polarisiertes Licht den Phasenmodulator passiert, ist der Phasenmodulator nicht aktiv, d.h. er wirkt nicht modulierend auf das entsprechende Signal. Auf diese Weise wird verhindert, dass eine ungewollte Modulation oder Verfälschung in die vertikal polarisierte Polarisationskomponente eingebracht wird. Die Polarisationskomponenten sind sowohl in unterschiedliche Richtungen polarisiert und passieren den Phasenmodulator mit zeitlichem Abstand. Der Phasenmodulator wendet eine Modulation nur auf eine Polarisationskomponente an. Wenn die nicht zu modulierende Polarisationskomponente den Phasenmodulator passiert, wird keine Modulation aufgebracht bzw. der Phasenmodulator ist nicht aktiv. Der Reflektor reflektiert die optischen Signale zurück zu dem Phasenmodulator und ändert die Polarisationsrichtung der Polarisationskomponenten. Die erste Polarisationskomponente erhält die zweite Polarisationsrichtung und die zweite Polarisationskomponente erhält die erste Polarisationsrichtung. Beide Polarisationskomponenten passieren erneut den Phasenmodulator. Nun wirkt der Phasenmodulator aber auf die andere Polarisationskomponente, weil sich die jeweilige Polarisationsrichtung geändert hat und der Phasenmodulator seine Polarisationsachse beibehält. Anschließend wird der zeitliche Versatz eliminiert und die beiden Polarisationskomponenten werden über einen gemeinsamen optischen Pfad ausgegeben. Beide Polarisationskomponenten enthalten nun eine gewünschte aufmodulierte Phaseninformation und ein optisches Signal, welches die beiden Polarisationskomponenten enthält, wird ausgegeben.

In anderen Worten und in einem nicht einschränken Beispiel kann die Arbeitsweise der Modulatoreinheit wie folgt beschrieben werden:
Der Phasenmodulator ist ausgestaltet, bevor die beiden Polarisationskomponenten auf den Reflektor treffen, eine Phasenmodulation ausschließlich auf die erste Polarisationskomponente aufzubringen, und nachdem der Reflektor die beiden Polarisationskomponenten reflektiert, eine Phasenmodulation ausschließlich auf die zweite Polarisationskomponente aufzubringen. Beim ersten Durchlauf, also wenn das optische Signal den Phasenmodulator erstmals passiert, wird von dem Phasenmodulator die erste Polarisationskomponente mit der ersten Polarisationsrichtung (beispielsweise horizontale Polarisationsrichtung) moduliert und die zweite Polarisationskomponente mit der zweiten Polarisationsrichtung (beispielsweise vertikale Polarisationsrichtung) wird unverändert übertragen. Beim zweiten Durchlauf, nachdem der Reflektor die Polarisationskomponenten reflektiert und in ihrer Polarisationsrichtung verändert hat, wird von dem Phasenmodulator die zweite Polarisationskomponente, die nun die erste Polarisationsrichtung hat (in diesem Beispiel horizontale Polarisationsrichtung), moduliert und die zweite Polarisationskomponente, die nun die zweite Polarisationsrichtung hat (in diesem Beispiel vertikale Polarisationsrichtung), wird unverändert übertragen.

Gemäß einer Ausführungsform hat die erste optische Teilstrecke eine erste optische Pfadlänge und die zweite optische Teilstrecke hat eine zweite optische Pfadlänge, wobei sich die erste optische Pfadlänge von der zweiten optischen Pfadlänge unterscheidet.

Die zeitliche Verzögerung zwischen den beiden Polarisationskomponenten kann grundsätzlich auf unterschiedliche Weisen eingebracht werden. Ganz allgemein erfolgt das durch eine unterschiedliche Signallaufzeit über die beiden optischen Teilstrecken. Diese unterschiedliche Signallaufzeit kann beispielsweise eingebracht werden, indem ein Verzögerungsglied verwendet wird. Sie kann aber auch eingebracht werden, indem die optischen Teilstrecken physikalisch unterschiedlich ausgestaltet sind, beispielsweise eine unterschiedliche optische Pfadlänge haben. Für eine fasergebundene optische Teilstrecke können unterschiedlich lange Fasern verwendet werden. Es ist auch denkbar, dass für beide Polarisationskomponenten eine einzelne polarisationserhaltende optische Faser benutzt wird, unter der Voraussetzung, dass diese optische Faser unterschiedliche Brechungsindizes auf den verschiedenen Polarisationsachsen hat, was für die zeitliche Verzögerung sorgt. Bei einem Freistrahl können die Elemente, welche für die Übertragung des optischen Freistrahls verwendet werden, in unterschiedlichen Abständen zueinander positioniert werden, um eine unterschiedliche optische Laufzeit der optischen Signale über die optischen Teilstrecken zu erreichen.

Gemäß einer weiteren Ausführungsform weist der Polarisationskomponentenseparator einen ersten polarisierenden Strahlteiler und einen zweiten polarisierenden Strahlteiler auf, wobei die erste optische Teilstrecke und die zweite optische Teilstrecke zwischen dem ersten polarisierenden Strahlteiler und dem zweiten polarisierenden Strahlteiler angeordnet sind.

Jeder polarisierende Strahlteiler hat eine erste Schnittstelle und eine zweite Schnittstelle. Optische Signale, die an der ersten Schnittstelle auf den polarisierenden Strahlteiler treffen, werden in Abhängigkeit von ihrer Polarisationsrichtung in Polarisationskomponenten aufgeteilt, welche dann an der zweiten Schnittstelle über die erste optische Teilstrecke oder über die zweite optische Teilstrecke gelenkt werden, so dass Polarisationskomponenten mit unterschiedlichen Polarisationsrichtungen unterschiedliche optische Teilstrecken durchlaufen. Umgekehrt werden optische Signale, die mit entsprechender Polarisationsrichtung über die beiden optischen Teilstrecken an der zweiten Schnittstelle auf den entsprechenden polarisierenden Strahlteiler treffen, zusammengeführt und über einen gemeinsamen optischen Pfad an der ersten Schnittstelle ausgegeben.

Ein optisches Signal von der Lichtquelle trifft in dem Polarisationskomponentenseparator zunächst auf den ersten polarisierenden Strahlteiler. Dieser erste polarisierende Strahlteiler teilt das optische Signal in die erste Polarisationskomponente mit erster Polarisationsrichtung und die zweite Polarisationskomponente mit zweiter Polarisationsrichtung auf. Die erste Polarisationskomponente wird über eine optische Teilstrecke geleitet, beispielsweise über die erste optische Teilstrecke. Die zweite Polarisationskomponente wird über die andere optische Teilstrecke geleitet, beispielsweise über die zweite optische Teilstrecke. Auf Grund der unterschiedlichen Signallaufzeiten über die optischen Teilstrecken wird ein relativer zeitlicher Versatz zwischen die beiden Polarisationskomponenten eingebracht. Nun erreichen die beiden Polarisationskomponenten den zweiten Strahlteiler, welcher die eingehenden Polarisationskomponenten wieder zusammenführt und diese über einen gemeinsamen optischen Pfad zu dem Phasenmodulator weitergibt. Die Polarisationskomponenten passieren den Phasenmodulator mit zeitlichem Abstand nacheinander. Eine Polarisationskomponente wird moduliert, die andere wird unverändert übertragen. Die Polarisationskomponenten treffen anschließend auf den Reflektor, welcher die Polarisationskomponenten reflektiert und dabei ihre Polarisationsrichtung verändert. Beispielsweise wird ein optisches Signal mit horizontaler Polarisationsrichtung so verändert, dass es vertikal polarisiert ist, und umgekehrt. Der Reflektor versieht die erste Polarisationskomponente mit der zweiten Polarisationsrichtung und die zweite Polarisationskomponente mit der ersten Polarisationsrichtung. Auf dem Rückweg moduliert der Phasenmodulator nun die zweite Polarisationskomponente und lässt die erste Polarisationskomponente unverändert passieren. Noch liegt ein zeitlicher Versatz zwischen den beiden Polarisationskomponenten. Dieser zeitliche Versatz wird eliminiert, wenn die Polarisationskomponenten den Polarisationskomponentenseparator zum zweiten Mal und in die entgegengesetzte Richtung durchlaufen. Die Polarisationskomponenten treffen auf den zweiten polarisierenden Strahlteiler. Dieser leitet die Polarisationskomponenten, die nun veränderte Polarisationsrichtungen haben, so über die optischen Teilstrecken, dass die Polarisationskomponenten nun diejenige optische Teilstrecke durchlaufen, welche sie auf dem Weg zu dem Phasenmodulator nicht durchlaufen haben. Beim ersten Durchlauf wird beispielsweise die erste Polarisationskomponente zeitlich verzögert und beim zweiten Durchlauf wird die zweite Polarisationskomponente zeitlich verzögert. Weil die Polarisationskomponenten den Polarisationskomponentenseparator in entgegengesetzte Richtungen durchlaufen, werden sie jeweils mit derselben zeitlichen Verzögerung beaufschlagt. Nachdem die Polarisationskomponenten den Polarisationskomponentenseparator zweimal und in entgegengesetzte Richtung durchlaufen haben, ist der relative zeitliche Versatz eliminiert.

Zusammengefasst: um die Polarisationskomponenten zu modulieren, werden die Polarisationskomponenten eines optischen Signals zunächst getrennt und ein zeitlicher Versatz zwischen die Polarisationskomponenten eingebracht. Die Polarisationskomponenten durchlaufen zweimal und mit jeweils veränderten Polarisationsrichtungen den Phasenmodulator. Beim ersten Durchlauf wird die erste Polarisationskomponente moduliert, beim zweiten Durchlauf wird die zweite Polarisationskomponente moduliert. Dann wird der zeitliche Versatz eliminiert und die beiden Polarisationskomponenten zusammengeführt, um dann als phasenmoduliertes optisches Signal ausgegeben zu werden.

Gemäß einer weiteren Ausführungsform weist der Phasenmodulator einen Kristall auf, welcher ausgestaltet ist, mit einer elektrischen Spannung beaufschlagt zu werden und dabei seinen Brechungsindex zu verändern, wodurch die Phase der ersten Polarisationskomponente und/oder der zweiten Polarisationskomponente des optischen Signals verändert wird. Der Brechungsindex kann aber auch verändert werden, indem eine mechanische Spannung beaufschlagt wird.

Der Phasenmodulator kann beispielsweise ein doppelbrechendes Medium enthalten, welches bei Anlegen einer Spannung die Phase eines durch das optische Medium passierenden optischen Signals verändert.

Gemäß einer weiteren Ausführungsform ist die Modulatoreinheit ausgestaltet, die an dem Kristall anliegende elektrische Spannung über der Zeit zu variieren.

Beispielsweise enthält die Modulatoreinheit eine Energieversorgung, welche eine vorgebbare elektrische Spannung bereitstellt. Eine Steuereinheit steuert die Energieversorgung an, damit letztere eine gewünschte elektrische Spannung an den Phasenmodulator bereitstellt. Durch die über der Zeit variierende elektrische Spannung an dem Phasenmodulator wird die Phase zwischen unterschiedlich polarisierten Komponenten des optischen Signals verändert.

Gemäß einer weiteren Ausführungsform unterscheidet sich ein Betrag der ersten Phase der ersten Polarisationskomponente des Eingangssignals in der ersten Polarisationsrichtung von einem Betrag der zweiten Phase der zweiten Polarisationskomponente des retroreflektierten optischen Signals in der ersten Polarisationsrichtung.

**In** anderen Worten bedeutet dies, dass der Phasenmodulator beim ersten Durchlauf eine andere Phase auf die horizontal polarisierte Komponente des optischen Signals moduliert als beim zweiten Durchlauf auf die dann horizontal polarisierte Komponente des retroreflektierten Signals. Dadurch verändert sich die Polarisation des Ausgangssignals der Modulatoreinheit.

Gemäß einer weiteren Ausführungsform ist der Phasenmodulator ausgestaltet, einen Unterschied zwischen der ersten Phase und der zweiten Phase über der Zeit zu verändern.

Indem der Phasenmodulator den Unterschied der Phasen im ersten Durchlauf und im zweiten Durchlauf über der Zeit verändert, wird die Polarisation des Ausgangssignals ebenfalls über der Zeit verändert.

Insgesamt ist die Polarisation des Ausgangssignals der Modulatoreinheit frei einstellbar zwischen zwei linearen Polarisationen (diagonal/antidiagonal, oder mit Verwendung einer zusätzlichen Wellenplatte am Ausgang des Polarisationsmodulators auch horizontal, vertikal) und zwei zirkularen Polarisationen (Z+ und Z-). Die Polarisation kann aber auch kontinuierlich auf sämtliche zwischen den diskreten Zuständen liegenden elliptischen Zustände eingestellt werden.

Gemäß einer weiteren Ausführungsform ist die Lichtquelle ausgestaltet, Licht mit einer wohldefinierten optischen Mode zu emittieren oder auszugeben. In dem vorliegenden Zusammenhang sind die Polarisations- und Kohärenzeigenschaften des optischen Signals von Bedeutung. Beispielsweise ist die Lichtquelle ein Laser.

Laser zeichnen sich dadurch aus, dass sie optische Signale mit einer wohldefinierten Polarisation emittieren können. Damit eignen sie sich insbesondere für Anwendungen wie hier beschrieben.

Gemäß einer weiteren Ausführungsform ist die Modulatoreinheit ausgestaltet, die Lichtquelle so anzusteuern, dass die Lichtquelle gepulste optische Signale emittiert.

Ein Lichtpuls passiert den Phasenmodulator und eine erste Polarisationskomponente wird in ihrer Phase moduliert. Sodann wird der Lichtpuls weiter zu dem Reflektor geleitet, dort wird die Polarisation des Lichtpulses geändert und der Lichtpuls zurück zu dem Phasenmodulator reflektiert. Beim zweiten Durchlauf moduliert der Phasenmodulator erneut eine Phase einer Polarisationskomponente des Lichtpulses auf.

Ein Lichtpuls ist beispielsweise so ausgelegt (z.B. hinsichtlich seiner Dauer), dass in dem Phasenmodulator das Licht bzw. eine seiner Polarisationskomponenten beim ersten Durchlauf (zu dem Reflektor) sich nicht mit einer anderen Polarisationskomponente desselben Lichtpulses oder eines anderen Lichtpulses überlagert, wenn diese sich im zweiten Durchlauf (von dem Reflektor) befinden.

In einer anderen Ausführungsform kann die Modulatoreinheit so ausgestaltet sein, dass sie gepulste optische Signale moduliert und emittiert. In diesem Beispiel kann die Modulatoreinheit die gepulsten optischen Signale von einer anderen Quelle erhalten.

Gemäß einer weiteren Ausführungsform weist die Modulatoreinheit weiterhin einen Strahlteiler auf, welcher zwischen der Lichtquelle und dem Polarisationskomponentenseparator angeordnet ist und ausgestaltet ist, mindestens einen Teil des von dem Polarisationskomponentenseparator phasenmodulierten retroreflektierten optischen Signals in eine vorgegebene Richtung zu lenken.

Der Strahlteiler ist angeordnet, um das von dem Polarisationskomponentenseparator nach dem zweiten Durchlauf ausgegebene optische Signal mindestens teilweise strukturell in eine gewünschte Richtung zu lenken, damit das von dem Polarisationskomponentenseparator ausgegebene optische Signal nicht ausschließlich in Richtung der Lichtquelle, welche das Eingangssignal zu dem Polarisationskomponentenseparator emittiert, abgibt. Das so erzeugte Ausgangssignal trägt in seiner Polarisation eine Information, die auf Seiten eines Empfängers ausgelesen und verarbeitet werden kann.

In einer Variante kann anstelle des Strahlteilers auch ein Zirkulator genutzt werden.

Gemäß einem weiteren Aspekt ist eine optische Signalübertragungsstrecke angegeben. Die optische Signalübertragungsstrecke weist eine Modulatoreinheit wie hierin beschrieben und einen Empfänger auf. Die Modulatoreinheit fungiert als Signalquelle bzw. Teil einer Sendeeinheit, welche ein optisches Signal ausgibt, auf dem eine Information aufgebracht ist. Die Signalquelle sendet das modulierte optische Signal in Richtung des Empfängers. Der Empfänger ist ausgestaltet, optische Signale zu empfangen. Die Modulatoreinheit ist angeordnet, das Ausgangssignal in Richtung des Empfängers zu emittieren.

Die Signalübertragungsstrecke kann für unidirektionale oder bidirektionale Signalübertragung ausgestaltet sein. Im Falle der bidirektionalen Signalübertragung gibt es mindestens zwei Kommunikationseinheiten, welche beide sowohl eine Modulatoreinheit als auch eine Empfangseinheit aufweisen.

Die hierin beschriebene Modulatoreinheit ist beispielsweise als Teil einer optischen Signalübertragungsstrecke implementiert. Damit ist die optische Signalübertragungsstrecke eingerichtet, Informationen mittels Polarisationsmodulation eines optischen Trägersignals zu übertragen. Die Polarisationsmodulation wird mittels der Modulatoreinheit in das optische Trägersignal eingebracht. Die Modulatoreinheit verhindert, dass Fehlerphasen durch den Phasenmodulator in eine Polarisationskomponente eingebracht werden, wenn diese Polarisationskomponente eine Polarisationsrichtung hat, die außerhalb der Polarisationsachse des Phasenmodulators liegt. Außerdem kompensiert die Modulatoreinheit Phasenfehler auf Grund der an der Modulation beteiligten Komponenten intrinsisch, weil die Polarisationskomponenten denselben optischen Pfad zweimal durchlaufen und dabei die orthogonal aufeinander stehenden Polarisationskomponenten des optischen Signals nacheinander moduliert werden.

Gemäß einer Ausführungsform ist die Modulatoreinheit in einem Satelliten angeordnet. Die Modulatoreinheit kann aber in jeglichem anderen Kommunikationssystem angeordnet sein.

Gemäß einem weiteren Aspekt ist ein Satellit mit einer Modulatoreinheit wie hierin beschrieben angegeben.

Eine Modulatoreinheit wie hierin beschrieben kann beispielsweise auf optischen Signalübertragungsstrecken verwendet werden, welche zwischen zwei mobilen Einheiten (Luft-, Wasser- oder Landfahrzeuge oder Satelliten), zwischen einer mobilen Einheit und einer Gegenstelle auf der Erdoberfläche, oder zwischen zwei stationären Einheiten zum Einsatz kommen.

### Kurze Beschreibung der Figuren

Nachfolgend wird anhand der beigefügten Zeichnungen näher auf Ausführungsbeispiele eingegangen. Die Darstellungen sind schematisch und nicht maßstabsgetreu. Gleiche Bezugszeichen beziehen sich auf gleiche oder ähnliche Elemente. Es zeigen:
- Fig. 1: eine schematische Darstellung einer Modulatoreinheit.
- Fig. 2: eine schematische Darstellung des optischen Pfads durch eine Modulatoreinheit.
- Fig. 3: eine schematische Darstellung eines Polarisationskomponentenseparators.
- Fig. 4: eine schematische Darstellung einer Modulatoreinheit.
- Fig. 5: eine schematische Darstellung einer optischen Signalübertragungsstrecke.

### Detaillierte Beschreibung von Ausführungsbeispielen

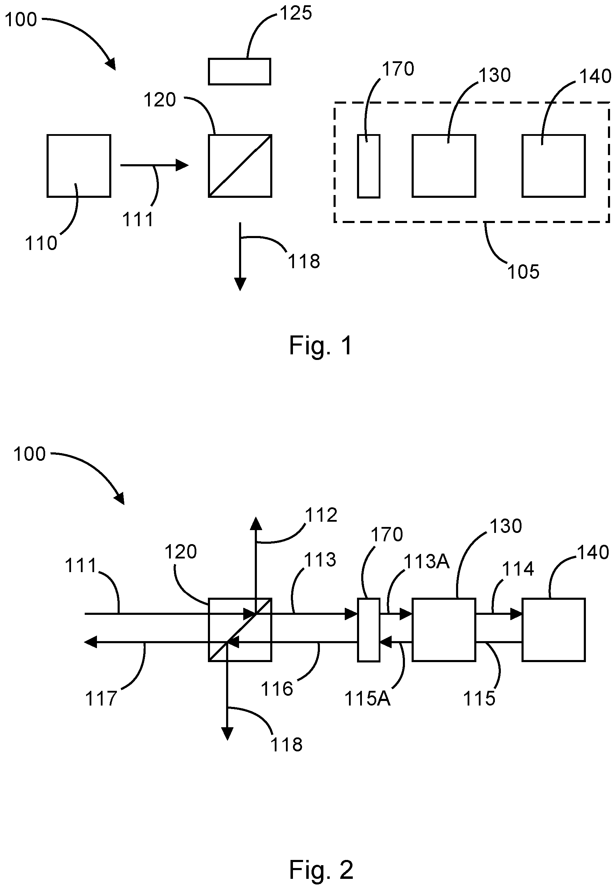

Fig. 1 zeigt den strukturellen Aufbau einer Modulatoreinheit 100. Die Modulatoreinheit 100 enthält eine Lichtquelle 110, einen Strahlteiler 120, einen Strahlabsorber 125, einen Polarisationskomponentenseparator 170, einen (polarisationsabhängigen oder polarisationsunabhängigen) Phasenmodulator in Form eines elektro-optischen Modulators, EOM, 130, sowie einen Reflektor in Form eines Faraday-Spiegels 140. Der EOM 130, der Faraday-Spiegel 140 und der Polarisationskomponentenseparator 170 können gemeinsam als Polarisationsmodulator 105 bezeichnet werden. Auch wenn hier beispielsweise auf einen Faraday-Spiegel 140 Bezug genommen wird, so gelten die entsprechenden Erläuterungen allgemein für einen hierin genannten Reflektor.

Die Lichtquelle 110, welche beispielsweise ein Laser ist, emittiert ein gepulstes optisches Signal in Form des Eingangssignals 111. Dieses Eingangssignal wird den übrigen Komponenten zugeführt und die Phase seiner Polarisationskomponenten wird phasenmoduliert, um in der Polarisation des aus den überlagerten Polarisationskomponenten resultierenden optischen Signals Informationen zu übertragen.

Die zu übertragenden Informationen sind auf dem Ausgangssignal 118 in der Polarisation des optischen Signals moduliert.

Wie die Polarisation des optischen Signals moduliert wird, wird nun mit Bezug zu Fig. 2, welche ergänzend zu Fig. 1 zu betrachten ist, beschrieben.

In Fig. 2 wird der Weg des optischen Signals durch die Modulatoreinheit 100 beschrieben. Dabei wird auf den Zustand des optischen Signals zu verschiedenen Zeitpunkten bzw. an verschiedenen Punkten in der Modulatoreinheit 100 Bezug genommen.

Zunächst trifft das Eingangssignal 111 auf den Strahlteiler 120. Der Strahlteiler 120 ist in diesem Beispiel als nichtpolarisierender Strahlteiler ausgestaltet. Ein Teil des Eingangssignals 111 wird als erster Teil 112 des aufgeteilten Eingangssignals in Richtung des Strahlabsorbers 125 gelenkt und ein anderer Teil des Eingangssignals 111 passiert den Strahlteiler 120 als zweiter Teil 113 des aufgeteilten Eingangssignals in Richtung des Polarisationskomponentenseparators 170 und des EOM 130.

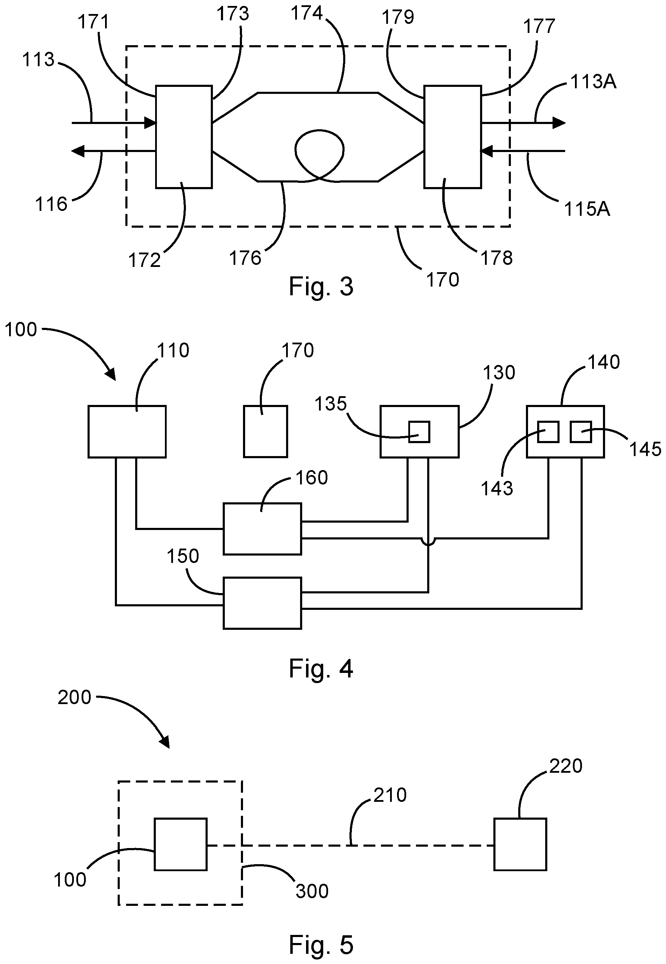

Die Funktion des Polarisationskomponentenseparators 170 wird mit Bezug zu Fig. 3 näher beschrieben. Allgemein hat der Polarisationskomponentenseparator 170 die Funktion, ein optisches Signal 113 (oder in der Gegenrichtung das optische Signal 115A) in seine Polarisationskomponenten aufzuteilen und diese über zwei unterschiedliche optische Teilstrecken (siehe Fig. 3) mit unterschiedlicher Signallaufzeit zu übertragen, wodurch eine relative zeitliche Verzögerung zwischen die beiden Polarisationskomponenten eingebracht (im ersten Durchlauf durch den Polarisationskomponentenseparator) oder eliminiert wird (im zweiten Durchlauf durch den Polarisationskomponentenseparator).

Das optische Signal 113A enthält also auf dem Weg zum EOM 130 zwei Polarisationskomponenten, die zeitlich zueinander versetzt sind. Physikalisch betrachtet werden hier also zwei Signale übertragen, jede Polarisationskomponente stellt ein optisches Signal dar. Die erste Polarisationskomponente enthält Licht mit einer ersten Polarisationsrichtung (beispielsweise horizontale Polarisation) und die zweite Polarisationskomponente enthält Licht mit einer von der ersten Polarisationsrichtung verschiedenen zweiten Polarisationsrichtung (beispielsweise vertikale Polarisation).

Der EOM 130 moduliert nun eine Polarisationskomponente des optischen Signals 113A, indem diese Polarisationskomponente des Signals 113A in seiner Phase verändert wird. Am Ausgang des EOM 130 liegt das optische Signal 114 so vor, dass die erste Polarisationskomponente mit der ersten Polarisationsrichtung in der Phase moduliert ist und die zweite Polarisationskomponente mit der zweiten Polarisationsrichtung nicht moduliert ist (wenn der EOM ein polarisationsabhängiger Phasenmodulator ist).

Der Faraday-Spiegel 140 retroreflektiert das Signal 114 und verändert dabei die Polarisation beider Polarisationskomponenten um jeweils 90°, so dass das optische Signal 114 mit seinen beiden Polarisationskomponenten als gespiegeltes Signal 115 zu dem EOM 130 reflektiert wird.

Das optische Signal 115 enthält also auch zwei Polarisationskomponenten, die relativ zueinander zeitlich verzögert sind. Die optischen Signale 113, 113A, 114 enthalten eine erste Polarisationskomponente mit erster Polarisationsrichtung und eine zweite Polarisationskomponente mit zweiter Polarisationsrichtung. Im Gegensatz dazu sind in dem optischen Signal 115 die Polarisationsrichtungen der beiden Polarisationskomponenten verändert: in dem optischen Signal 115 enthält die erste Polarisationskomponente Licht mit der zweiten Polarisationsrichtung und die zweite Polarisationskomponente enthält Licht mit der ersten Polarisationsrichtung. So durchlaufen die erste und zweite Polarisationskomponente den EOM 130. Nun wird aber die zweite Polarisationskomponente moduliert, weil die zweite Polarisationskomponente das Licht mit der ersten Polarisationsrichtung enthält, wohingegen die erste Polarisationskomponente, die Licht mit der zweiten Polarisationsrichtung enthält, nicht moduliert wird.

Wenn beispielsweise beim ersten Durchlauf zwischen den Signalen 113 und 114 durch den EOM der horizontal polarisierte Puls des optischen Signals moduliert wurde, dann steckt beim zweiten Durchlauf diese Modulation nun in dem vertikal polarisierten Puls des optischen Signals 115, weil der Faraday-Spiegel 140 die Polarisation um 90° verändert hat. Durchläuft das optische Signal 115 nun beim zweiten Durchlauf erneut den EOM 130, so wird der nun horizontal polarisierte Puls (entspricht dem vertikal polarisierten Puls beim ersten Durchlauf, der beim ersten Durchlauf keine Änderung seiner Phase erfahren hat) in seiner Phase verändert.

Die optische Länge zwischen dem EOM 130 und dem Faraday-Spiegel 140 ist so bemessen, dass ein optisches Signal beim zweiten Durchlauf ein optisches Signal beim ersten Durchlauf innerhalb des EOMs nicht überlagert während eines dieser optischen Signale moduliert wird. Bei einem polarisationsabhängigen Phasenmodulator dürfen sich Polarisationskomponenten unterschiedlicher Polarisationsrichtungen überlagern, da nur eine Polarisationsrichtung moduliert wird. Allgemein ausgedrückt ist die Länge des optischen Pfads zwischen EOM und Faraday-Spiegel so bemessen, dass eine Polarisationskomponente beim zweiten Durchlauf eine Polarisationskomponente beim ersten Durchlauf nicht überlagert. Insbesondere ist die Länge des optischen Pfads auf die Dauer eines Lichtpulses der Lichtquelle 110 und die Übertragungsrate abgestimmt.

Somit werden durch den EOM auf demselben optischen Pfad beide Polarisationskomponenten des optischen Signals mit einer Phase beaufschlagt. Indem jeweils die entsprechende Phase für die erste Polarisationskomponente beim ersten Durchlauf und für die zweite Polarisationskomponente beim zweiten Durchlauf vorgegeben wird, kann die Polarisation des resultierenden optischen Signals 116 variiert werden.

Das optische Signal 116 ist nun in beiden Polarisationskomponenten phasenmoduliert. Aus der Überlagerung dieser beiden Modulationen ergibt sich die Polarisation des optischen Signals 116, in welcher die zu übertragende Information enthalten ist.

Nun trifft das optische Signal 116 erneut auf den Strahlteiler 120, ein Teil 117 des optischen Signals passiert den Strahlteiler und ein weiterer Teil 118 wird in eine andere Richtung abgelenkt und entspricht dem zu übertragenden Ausgangssignal, in dessen Polarisation die zu übertragende Information enthalten ist. Alternativ ist denkbar, dass das Ausgangssignal den Strahlteiler passiert und das abgelenkte Signal verworfen wird.

Fig. 3 zeigt schematisch den Aufbau eines Polarisationskomponentenseparators 170. Der Polarisationskomponentenseparator 170 ist ausgestaltet, unterschiedlich polarisierte Komponenten eines optischen Signals voneinander zu separieren und über unterschiedliche optische Teilstrecken zu übertragen. Der Polarisationskomponentenseparator 170 arbeitet bidirektional, d.h. dass optische Signale den Polarisationskomponentenseparator 170 in zwei Richtungen (also von links nach rechts, Signale 113 und 113A, als auch von rechts nach links, also Signale 115A, 116) passieren können, wobei der Polarisationskomponentenseparator 170 für optische Signale in beiden Richtungen dieselbe Funktion ausführt.

Im Folgenden wird der Weg des optischen Signals 113 durch den Polarisationskomponentenseparator 170 beschrieben. Dieser Weg wird als erster Durchlauf bezeichnet. Für den Weg des optischen Signals 115A durch den Polarisationskomponentenseparator 170 gilt dann sinngemäß das Gleiche, wobei dieser Weg als zweiter Durchlauf bezeichnet wird.

Zunächst trifft ein optisches Signal 113 mit zwei darin enthaltenen Polarisationskomponenten (z.B. horizontale Polarisationskomponente und vertikale Polarisationskomponente) auf die erste Schnittstelle 171 des ersten polarisierenden Strahlteilers 172. Der erste polarisierende Strahlteiler 172 trennt die beiden Polarisationskomponenten voneinander. Ein in den polarisierenden Strahlteiler 172 eingespeistes optisches Signal 113 wird aufgeteilt und resultiert in zwei optischen Polarisationskomponenten, welche an der zweiten Schnittstelle 173 des ersten polarisierenden Strahlteilers 172 ausgegeben und jeweils über eine der zwei voneinander getrennten optischen Teilstrecken 174, 176 geleitet werden. Die erste Polarisationskomponente wird beispielsweise über die erste optische Teilstrecke 174 geleitet und die zweite Polarisationskomponente wird über die zweite optische Teilstrecke 176 geleitet. Die optischen Teilstrecken 174, 176 haben unterschiedliche Signallaufzeiten für optische Signale bzw. unterschiedliche optische Pfadlängen. Ausgehend von einer identischen oder nahezu identischen Ausbreitungsgeschwindigkeit von optischen Signalen über die beiden optischen Teilstrecken 174, 176 ist die Laufzeit von optischen Signalen über die optischen Teilstrecken 174, 176 unterschiedlich lang. Beispielsweise ist die zweite optische Teilstrecke 176 länger als die erste optische Teilstrecke 174.

Somit erfahren die zwei Polarisationskomponenten, in welche das optische Signal 113 aufgeteilt wurde, durch die erste und zweite optische Teilstrecke 174, 176 einen relativen zeitlichen Versatz. Bevorzugt ist der zeitliche Versatz zwischen den beiden Polarisationskomponenten so bemessen, dass es keinen zeitlichen Überlapp zwischen den beiden Polarisationskomponenten gibt, nachdem diese ausgangsseitig, also bei dem zweiten polarisierenden Strahlteiler 178, wieder auf einen gemeinsamen optischen Pfad gegeben werden. Das bedeutet, dass die erste Polarisationskomponente über die erste optische Teilstrecke 174 und die zweite Polarisationskomponente über die zweite optische Teilstrecke 176 auf eine Weise bei dem zweiten polarisierenden Strahlteiler 178 ankommt, dass die zweite Polarisationskomponente erst ankommt, nachdem die erste Polarisationskomponente die zweite Schnittstelle 179 des zweiten polarisierenden Strahlteilers 178 passiert hat. Es gibt also einen echten zeitlichen Versatz zwischen den beiden Polarisationskomponenten.

Die beiden Polarisationskomponenten erreichen über die erste und zweite optische Teilstrecke 174, 176 die zweite Schnittstelle 179 des zweiten polarisierenden Strahlteilers 178. Die beiden Polarisationskomponenten werden von dem zweiten polarisierenden Strahlteiler zusammengeführt und an der ersten Schnittstelle 177 über einen gemeinsamen optischen Pfad in Richtung des Phasenmodulators 130 ausgegeben.

Diese Funktion, die für das optische Signal 113 durch den Polarisationskomponentenseparator 170 beschrieben wurde, findet sinngemäß Anwendung auch für das optische Signal 115A, welches den Polarisationskomponentenseparator 170 in die entgegengesetzte Richtung (im Vergleich zu dem optischen Signal 113) durchläuft.

Das optische Signal 113 wird als gepulstes Signal übertragen. Die Lichtpulse haben eine bestimmte Pulsdauer mit einem Anfangs- und Endzeitpunkt. Zwischen den Lichtpulsen gibt es eine vorgegebene Zeit, in Abhängigkeit der Übertragungsfrequenz, während der kein optisches Signal übertragen wird. Somit werden auch die einzelnen Polarisationskomponenten als Lichtpulse übertragen. Nachdem die Polarisationskomponenten die optischen Teilstrecken 174, 176 passiert haben, gibt es einen zeitlichen Versatz zwischen den Lichtpulsen der einen Polarisationskomponente und den Lichtpulsen der zweiten Polarisationskomponente.

Im Beispiel der Fig. 3 kann der Lichtpuls der zweiten Polarisationskomponente, die über die zweite optische Teilstrecke 176 übertragen wird, als verzögerter Lichtpuls bezeichnet werden, wohingegen der Lichtpuls der ersten Polarisationskomponente, die über die erste optische Teilstrecke 174 übertragen wird, als nicht verzögerter Lichtpuls bezeichnet werden kann. Der zeitliche Versatz zwischen den Lichtpulsen der beiden Polarisationskomponenten ist bevorzugt so ausgestaltet, dass der Anfangszeitpunkt des verzögerten Lichtpulses zeitlich nach dem Endzeitpunkt des nicht verzögerten Lichtpulses liegt und zwischen dem Anfangszeitpunkt des verzögerten Lichtpulses und dem Endzeitpunkt des nicht verzögerten Lichtpulses eine Zeitspanne liegt, die beispielsweise größer als 0 Sekunden ist.

Der zeitliche Versatz wird von der jeweiligen Laufzeit eines optischen Signals über die zwei optischen Teilstrecken 174, 176 definiert. Somit kann der zeitliche Versatz zwischen den beiden Polarisationskomponenten beeinflusst werden, indem die Signallaufzeiten oder optischen Längen der zwei optischen Teilstrecken 174, 176 entsprechend gewählt werden.

Die optischen Teilstrecken 174, 176 können fasergebunden oder als Freistrahl realisiert sein. Für fasergebundene optische Teilstrecken gilt dann beispielsweise, dass die optischen Fasern polarisationserhaltende optische Fasern sind. Weiterhin gilt, dass die optische Faser der ersten optischen Teilstrecke 174 eine erste Länge hat, welche von einer zweiten Länge der optischen Faser der zweiten optischen Teilstrecke 176 abweicht. Dieser Längenunterschied der optischen Teilstrecken 174, 176 ist in Fig. 3 als Schleife in der zweiten optischen Teilstrecke 176 gezeigt. In anderen Worten ist die Faser der zweiten optischen Teilstrecke 176 länger als die Faser der ersten optischen Teilstrecke 174.

Die optischen Teilstrecken 174, 176 können auch als Freistrahl realisiert sein. Hierbei wird ein optischer Strahl beispielsweise mittels Spiegeln oder anderen optischen Umlenkelementen über eine vorgegebene Strecke gelenkt. Die Länge der optischen Teilstrecken kann über die Position der Spiegel beeinflusst werden.

Im Allgemeinen kann die Funktion des Polarisationskomponentenseparators 170 wie folgt beschrieben werden: ein optisches Signal mit zwei Polarisationskomponenten wird in diese beiden Polarisationskomponenten aufgeteilt. Die Polarisationskomponenten werden über getrennte optische Teilstrecken übertragen. Eine Polarisationskomponente erfährt auf ihrer optischen Teilstrecke eine Verzögerung. Diese Verzögerung kann durch unterschiedliche optische Längen der optischen Teilstrecken entstehen. Es ist aber auch denkbar, ein optisches Verzögerungsglied in eine optische Teilstrecke zu integrieren, um die Laufzeit einer Polarisationskomponente im Vergleich zu der Laufzeit der anderen Polarisationskomponente zu erhöhen. Die auf diese Weise mit einem zeitlichen Versatz versehenen Polarisationskomponenten werden anschließend wieder auf einen gemeinsamen optischen Pfad zusammengeführt und übertragen. Nun kann eine Polarisationskomponente moduliert werden. Der Reflektor reflektiert die Polarisationskomponenten zurück zu dem Phasenmodulator und verändert dabei ihre Polarisationsrichtung. Nun moduliert der Phasenmodulator die andere Polarisationskomponente. Nachdem die zwei Polarisationskomponenten den Phasenmodulator jeweils zweimal passiert haben (einmal von links nach rechts und einmal von rechts nach links) haben beide Polarisationskomponenten eine Modulation erfahren. Zu diesem Zeitpunkt liegt aber immer noch ein zeitlicher Versatz zwischen den beiden Polarisationskomponenten. Dieser zeitliche Versatz wird eliminiert, indem die Polarisationskomponenten erneut den Polarisationskomponentenseparator durchlaufen. Die Polarisationskomponenten treffen auf den zweiten polarisierenden Strahlteiler 178. Der zweite polarisierende Strahlteiler 178 funktioniert so, dass die Polarisationskomponenten in Abhängigkeit von ihrer Polarisationsrichtung über die erste optische Teilstrecke 174 oder die zweite optische Teilstrecke 176 geleitet werden. Weil allerdings der Reflektor 140 die Polarisationsrichtung der Polarisationskomponenten beim Reflektionsvorgang geändert hat, durchlaufen die Polarisationskomponenten beim zweiten Durchlauf (von rechts nach links, optische Strahlen 115A, 116) die jeweils andere optische Teilstrecke. D.h., dass die Polarisationskomponente, die beim ersten Durchlauf die erste optische Teilstrecke 174 passiert hat, beim zweiten Durchlauf über die zweite optische Teilstrecke 176 übertragen wird, und umgekehrt. Beim zweiten Durchlauf wird also diejenige Polarisationskomponente verzögert, die beim ersten Durchlauf nicht verzögert wurde, und umgekehrt. In Summe, nachdem die beiden Polarisationskomponenten den Polarisationskomponentenseparator 170 und den Phasenmodulator 130 in beide Richtungen passiert haben, sind beide Polarisationskomponenten moduliert und haben keinen zeitlichen Versatz mehr zueinander. Jeweils eine Polarisationskomponente erfährt in jeweils einer Richtung durch den Polarisationskomponentenseparator 170 das gleiche Ausmaß an relativer zeitlicher Verzögerung, so dass in dem optischen Signal 116 die beiden Polarisationskomponenten zeitlich wieder zusammenfallen.

Beim ersten Durchlauf, also auf dem Weg von links nach rechts in der Darstellung der Fig. 1 bis 3 und bezogen auf den Weg des optischen Signals 113, wendet der polarisationsabhängige Phasenmodulator 130 eine Phasenmodulation auf eine erste Polarisationskomponente an. Die andere (zweite) Polarisationskomponente wird nicht moduliert. Beim zweiten Durchlauf, also auf dem Weg von rechts nach links in der Darstellung der Fig. 1 bis 3 und bezogen auf den Weg des optischen Signals 115A, wendet der polarisationsabhängige Phasenmodulator 130 eine Phasenmodulation auf die zweite Polarisationskomponente an. Die erste Polarisationskomponente wird nicht moduliert.

Der Phasenmodulator 130 wird bevorzugt so angesteuert, dass er eine Phasenmodulation nur dann aufbringt, wenn eine erste Polarisationskomponente mit entsprechender Polarisationsrichtung den Phasenmodulator passiert. Wenn eine zweite Polarisationskomponente mit einer abweichenden Polarisationsrichtung den Phasenmodulator passiert, wendet der Phasenmodulator keine Modulation an. Somit kann sichergestellt werden, dass die zweite Polarisationskomponente weder beabsichtigt noch unbeabsichtigt, z.B. durch parasitäre Effekte, mit einer Phasenmodulation beaufschlagt wird. Dies hat den Vorteil, dass die hier beschriebene Vorrichtung eine hochgenaue Phasenmodulation mit einem niedrigen Fehlereintrag vornehmen kann.

Nachdem der Phasenmodulator 130 auf diese Weise eine Phasenmodulation auf die erste Polarisationskomponente aufgebracht hat, erreichen die beiden Polarisationskomponenten den Reflektor 140. Der Reflektor 140 reflektiert die beiden Polarisationskomponenten und verändert dabei ihre Polarisationsrichtungen, so dass beim zweiten Durchlauf (von rechts nach links, d.h. Signalrichtung 115, 115A, 116) die erste Polarisationskomponente die Polarisationsrichtung der zweiten Polarisationskomponente des ersten Durchlaufs annimmt und die zweite Polarisationskomponente die Polarisationsrichtung der ersten Polarisationskomponente des ersten Durchlaufs annimmt. Der Phasenmodulator 130 bringt nun eine Phasenmodulation auf die zweite Polarisationskomponente auf, ohne dabei eine Modulation anzuwenden, wenn die erste Polarisationskomponente durch den Phasenmodulator 130 übertragen wird.

Fig. 4 stellt dar, wie die Komponenten der Modulatoreinheit 100 angesteuert werden, um die zu übertragende Information in die Polarisation des optischen Signals einzubringen.

Die Modulatoreinheit 100 enthält eine Energieversorgung 160 und eine Steuereinheit 150. Sowohl die Energieversorgung 160 als auch die Steuereinheit 150 ist mit der Lichtquelle 110, dem EOM 130 und dem Faraday-Spiegel 140 verbunden. Die Steuereinheit 150 kann aber auch direkt mit der Energieversorgung 160 verbunden sein, um eine von der Energieversorgung 160 an dem jeweiligen Anschluss ausgegebene elektrische Spannung vorzugeben.

Die Energieversorgung 160 versorgt die Lichtquelle 110 mit elektrischer Energie, damit die Lichtquelle das optische Signal, welches als Eingangssignal fungiert, erzeugt. Weiterhin versorgt die Energieversorgung 160 den EOM 130 mit elektrischer Energie, beispielsweise einer elektrischen Spannung, die an einem Kristall 135 anliegt. Diese elektrische Spannung beeinflusst den Kristall 135 dahingehend, dass die Phase einer Polarisationskomponente eines passierenden optischen Signals verändert wird. Beispielsweise können Variationen der elektrischen Spannung die Phase unterschiedlich stark verändern. Die Steuereinheit 150 und die Energieversorgung 160 steuern den EOM so an, dass dieser beim ersten und zweiten Durchlauf des optischen Signals auf die gewünschte Weise auf die den EOM passierende Polarisationskomponente wirkt und die Phase der beeinflussten Polarisationskomponente entsprechend und wie gewünscht verändert. Hierbei muss die Steuereinheit und die Energieversorgung entsprechend schnell schalten und den EOM ansteuern.

Die Polarisation eines passierenden optischen Signals wird in dem Faraday-Rotator 143 verändert, im vorliegenden Beispiel um 45°. Dann trifft das optische Signal auf den Spiegel 145, wird davon reflektiert und passiert erneut den Faraday-Rotator 143. Nun wird die Polarisation des optischen Signals erneut um 45° in dieselbe Richtung verändert, so dass sich die Polarisation der in den Faraday-Spiegel einfallenden optischen Signals und die Polarisation des von dem Faraday-Spiegel ausgegebenen optischen Signals um 90° unterscheidet.

Die Steuereinheit 150 ist ausgestaltet, die Energieversorgung 160 und/oder jede einzelne der Komponenten 110, 130, 140 so anzusteuern, dass diese Komponenten mit der für ihre Funktion benötigten Energie versorgt werden. Hierzu kann die Steuereinheit 150 Steuerkommandos an die Komponenten 110, 130, 140 und/oder Steuerkommandos an die Energieversorgung 160 senden.

Der Polarisationskomponentenseparator 170 ist zwischen der Lichtquelle 110 und dem Phasenmodulator 130 angeordnet. Bei dem Polarisationskomponentenmodulator kann es sich um ein passives Bauteil handeln, welches keine gesonderte Ansteuerung durch die Steuereinheit 150 erfordert. Es ist allerdings auch denkbar, dass der Polarisationskomponentenseparator 170 ein aktives Bauteil ist, welches von der Energieversorgung 160 mit Energie versorgt und von der Steuereinheit 150 angesteuert wird. Beispielsweise kann der Polarisationskomponentenseparator 170 ausgestaltet sein, die Signallaufzeit einer Polarisationskomponente zu variieren und die Steuereinheit 150 kann ausgestaltet sein, das Ausmaß der zeitlichen Verzögerung einer Polarisationskomponente durch den Polarisationskomponentenseparator 170 vorzugeben.

Fig. 5 zeigt eine optische Signalübertragungsstrecke 200. Eine Modulatoreinheit 100 fungiert als Signalquelle bzw. Sender. Die Modulatoreinheit 100 moduliert die Polarisation eines optischen Signals wie oben beschrieben und sendet das modulierte optische Signal über einen Übertragungspfad 210. Der Übertragungspfad 210 ist beispielsweise ein leitungsloser optischer Pfad.

Das modulierte optische Signal wird von einer Gegenstelle empfangen und verarbeitet. Bei der Gegenstelle handelt es sich um den Empfänger 220. Die Modulatoreinheit 100 kann an Bord eines Satelliten oder auf der Erdoberfläche angeordnet sein. Der Empfänger 220 kann auf der Erdoberfläche oder an Bord eines anderen Satelliten angeordnet sein.

Ergänzend ist darauf hinzuweisen, dass "umfassend" oder "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste

- 100: Modulatoreinheit
- 105: Polarisationsmodulator
- 110: Lichtquelle
- 111: Eingangssignal
- 112: erster Teil des aufgeteilten Eingangssignals
- 113: zweiter Teil des aufgeteilten Eingangssignals
- 114: einfachmoduliertes Signal
- 115: gespiegeltes Signal
- 116: zweifachmoduliertes Signal
- 117: rückläufiges Signal
- 118: Ausgangssignal
- 120: Strahlteiler
- 125: Strahlabsorber
- 130: Phasenmodulator
- 135: Kristall
- 140: Reflektor, Faraday-Spiegel
- 143: Faraday-Rotator
- 145: Spiegel
- 150: Steuereinheit
- 160: Energieversorgung
- 170: Polarisationskomponentenseparator
- 171: erste Schnittstelle
- 172: erster polarisierender Strahlteiler
- 173: zweite Schnittstelle
- 174: erste optische Teilstrecke
- 176: zweite optische Teilstrecke
- 177: erste Schnittstelle
- 178: zweiter polarisierender Strahlteiler
- 179: zweite Schnittstelle
- 200: optische Signalübertragungsstrecke
- 210: Übertragungspfad, optisches Signal
- 220: Empfänger
- 300: Satellit

## Patentansprüche

1. Modulatoreinheit (100) zum Modulieren der Polarisation eines optischen Signals, aufweisend:
eine Lichtquelle (110);
einen Polarisationskomponentenseparator (170);
einen Phasenmodulator (130);
einen Reflektor (140);
wobei die Lichtquelle (110) ausgestaltet ist, ein optisches Signal auszugeben und als Eingangssignal (111) in Richtung des Polarisationskomponentenseparators (170) zu emittieren, wobei das optische Signal eine erste Polarisationskomponente mit einer ersten Polarisationsrichtung und eine zweite Polarisationskomponente mit einer zweiten Polarisationsrichtung enthält;
wobei der Polarisationskomponentenseparator (170) ausgestaltet ist, die erste Polarisationskomponente von der zweiten Polarisationskomponente zu separieren und die erste Polarisationskomponente über eine erste optische Teilstrecke (174) und die zweite Polarisationskomponente über eine zweite optische Teilstrecke (176) zu übertragen;
wobei der ersten optischen Teilstrecke (174) eine erste Signallaufzeit zugeordnet ist und der zweiten optischen Teilstrecke (176) eine zweite Signallaufzeit zugeordnet ist, wobei die erste Signallaufzeit sich von der zweiten Signallaufzeit unterscheidet;
wobei der Polarisationskomponentenseparator (170) ausgestaltet ist, als Ergebnis des Unterschieds zwischen der ersten Signallaufzeit und der zweiten Signallaufzeit, einen zeitlichen Versatz zwischen die erste Polarisationskomponente und die zweite Polarisationskomponente einzubringen und die erste Polarisationskomponente und die zweite Polarisationskomponente auf einem gemeinsamen optischen Pfad zu dem Phasenmodulator (130) zu übertragen;
wobei der Phasenmodulator (130) ausgestaltet ist, eine erste Phase der ersten Polarisationskomponente in der ersten Polarisationsrichtung zu modulieren und die modulierte erste Polarisationskomponente an den Reflektor (140) weiterzuleiten;
wobei der Reflektor (140) ausgestaltet ist, sowohl die erste Polarisationskomponente als auch die zweite Polarisationskomponente in Richtung des Phasenmodulators (130) zu retroreflektieren und dabei die jeweilige Polarisation zu verändern, so dass die erste Polarisationskomponente mit der ersten Polarisationsrichtung die zweite Polarisationsrichtung erhält und die zweite Polarisationskomponente mit der zweiten Polarisationsrichtung die erste Polarisationsrichtung erhält;
wobei der Phasenmodulator (130) ausgestaltet ist, eine zweite Phase der retroreflektierten zweiten Polarisationskomponente in der ersten Polarisationsrichtung zu modulieren und die retroreflektierte erste Polarisationskomponente und die retroreflektierte zweite Polarisationskomponente an den Polarisationskomponentenseparator (170) zu übertragen;
wobei der Polarisationskomponentenseparator (170) ausgestaltet ist, den zeitlichen Versatz zwischen der retroreflektierten ersten Polarisationskomponente und der retroreflektierten zweiten Polarisationskomponente zu eliminieren und die retroreflektierte erste Polarisationskomponente und die retroreflektierte zweite Polarisationskomponente ohne zeitlichen Versatz über einen gemeinsamen optischen Pfad auszugeben;
wobei die Modulatoreinheit (100) ausgestaltet ist, das so modulierte optische Signal als polarisationsmoduliertes Ausgangssignal (118) auszugeben.

2. Modulatoreinheit (100) nach Anspruch 1,
wobei die erste optische Teilstrecke (174) eine erste optische Pfadlänge hat und die zweite optische Teilstrecke (176) eine zweite optische Pfadlänge hat, wobei sich die erste optische Pfadlänge von der zweiten optischen Pfadlänge unterscheidet.

3. Modulatoreinheit (100) nach Anspruch 1 oder 2,
wobei der Polarisationskomponentenseparator (170) einen ersten polarisierenden Strahlteiler (172) und einen zweiten polarisierenden Strahlteiler (178) aufweist;
wobei die erste optische Teilstrecke (174) und die zweite optische Teilstrecke (176) zwischen dem ersten polarisierenden Strahlteiler (172) und dem zweiten polarisierenden Strahlteiler (178) angeordnet sind.

4. Modulatoreinheit (100) nach einem der voranstehenden Ansprüche,
wobei der Phasenmodulator (130) einen Kristall (135) aufweist, welcher ausgestaltet ist, mit einer elektrischen Spannung beaufschlagt zu werden und dabei seinen Brechungsindex zu verändern, wodurch die Phase der ersten Polarisationskomponente und/oder der zweiten Polarisationskomponente des optischen Signals verändert wird.

5. Modulatoreinheit (100) nach Anspruch 4,
wobei die Modulatoreinheit (100) ausgestaltet ist, die an dem Kristall (135) anliegende elektrische Spannung über der Zeit zu variieren.

6. Modulatoreinheit (100) nach einer der voranstehenden Ansprüche,
wobei ein Betrag der ersten Phase der ersten Polarisationskomponente des Eingangssignals (111) in der ersten Polarisationsrichtung sich von einem Betrag der zweiten Phase der zweiten Polarisationskomponente des retroreflektierten optischen Signals in der ersten Polarisationsrichtung unterscheidet.

7. Modulatoreinheit (100) nach Anspruch 6,
wobei der Phasenmodulator (130) ausgestaltet ist, einen Unterschied zwischen der ersten Phase und der zweiten Phase über der Zeit zu verändern.

8. Modulatoreinheit (100) nach einem der voranstehenden Ansprüche,
wobei die Lichtquelle (110) ausgestaltet ist, Licht mit einer definierten optischen Mode auszugeben.

9. Modulatoreinheit (100) nach einem der voranstehenden Ansprüche,
wobei die Modulatoreinheit (100) ausgestaltet ist, die Lichtquelle (110) so anzusteuern, dass die Lichtquelle (110) gepulste optische Signale emittiert.

10. Modulatoreinheit (100) nach einem der voranstehenden Ansprüche,
weiterhin aufweisend einen Strahlteiler (120), welcher zwischen der Lichtquelle (110) und dem Polarisationskomponentenseparator (170) angeordnet ist und ausgestaltet ist, mindestens einen Teil des von dem Polarisationskomponentenseparator (170) phasenmodulierten retroreflektierten optischen Signals in eine vorgegebene Richtung zu lenken.

11. Optische Signalübertragungsstrecke (200), aufweisend
eine Modulatoreinheit (100) nach einem der Ansprüche 1 bis 10;
einen Empfänger (220), welcher ausgestaltet ist, optische Signale zu empfangen;
wobei die Modulatoreinheit (100) angeordnet ist, das Ausgangssignal (118) in Richtung des Empfängers (220) zu emittieren.

12. Satellit (300) mit einer Modulatoreinheit (100) nach einem der Ansprüche 1 bis 10.

## Claims

1. Modulator unit (100) for modulating the polarization of an optical signal, comprising:
a light source (110);
a polarization component separator (170);
a phase modulator (130);
a reflector (140);
wherein the light source (110) is designed to output an optical signal and emit the latter as an input signal (111) in the direction of the polarization component separator (170), wherein the optical signal contains a first polarization component with a first polarization direction and a second polarization component with a second polarization direction;
wherein the polarization component separator (170) is designed to separate the first polarization component from the second polarization component and transmit the first polarization component via a first optical section (174) and the second polarization component via a second optical section (176);
wherein the first optical section (174) is assigned a first signal propagation time and the second optical section (176) is assigned a second signal propagation time, the first signal propagation time differing from the second signal propagation time;
wherein, as a result of the difference between the first signal propagation time and the second signal propagation time, the polarization component separator (170) is designed to introduce a time offset between the first polarization component and the second polarization component and transmit the first polarization component and the second polarization component on a joint optical path to the phase modulator (130);
wherein the phase modulator (130) is designed to modulate a first phase of the first polarization component in the first polarization direction and transfer the modulated first polarization component to the reflector (140);
wherein the reflector (140) is designed to retroreflect both the first polarization component and the second polarization component in the direction of the phase modulator (130) and in the process modify the respective polarization such that the first polarization component with the first polarization direction receives the second polarization direction and the second polarization component with the second polarization direction receives the first polarization direction;
wherein the phase modulator (130) is designed to modulate a second phase of the retroreflected second polarization component in the first polarization direction and transmit the retroreflected first polarization component and the retroreflected second polarization component to the polarization component separator (170);
wherein the polarization component separator (170) is designed to eliminate the time offset between the retroreflected first polarization component and the retroreflected second polarization component and output the retroreflected first polarization component and the retroreflected second polarization component without a time offset via a joint optical path;
wherein the modulator unit (100) is designed to output the optical signal modulated thus as polarization-modulated output signal (118).

2. Modulator unit (100) according to Claim 1,
wherein the first optical section (174) has a first optical path length and the second optical section (176) has a second optical path length, the first optical path length differing from the second optical path length.

3. Modulator unit (100) according to Claim 1 or 2,
wherein the polarization component separator (170) comprises a first polarizing beam splitter (172) and a second polarizing beam splitter (178);
wherein the first optical section (174) and the second optical section (176) are arranged between the first polarizing beam splitter (172) and the second polarizing beam splitter (178).

4. Modulator unit (100) according to any of the preceding claims,
wherein the phase modulator (130) comprises a crystal (135) designed to have a voltage applied thereto and designed to change its refractive index in the process, whereby the phase of the first polarization component and/or second polarization component of the optical signal is modified.

5. Modulator unit (100) according to Claim 4,
wherein the modulator unit (100) is designed to vary the voltage applied to the crystal (135) over time.

6. Modulator unit (100) according to any of the preceding claims,
wherein an absolute value of the first phase of the first polarization component of the input signal (111) in the first polarization direction differs from an absolute value of the second phase of the second polarization component of the retroreflected optical signal in the first polarization direction.

7. Modulator unit (100) according to Claim 6,
wherein the phase modulator (130) is designed to change a difference between the first phase and the second phase over time.

8. Modulator unit (100) according to any of the preceding claims,
wherein the light source (110) is designed to output light with a defined optical mode.

9. Modulator unit (100) according to any of the preceding claims,
wherein the modulator unit (100) is designed to control the light source (110) such that the light source (110) emits pulsed optical signals.

10. Modulator unit (100) according to any of the preceding claims,
further comprising a beam splitter (120) arranged between the light source (110) and the polarization component separator (170) and designed to steer, in a given direction, at least a portion of the retroreflected optical signal phase-modulated by the polarization component separator (170).

11. Optical signal transmission path (200), comprising a modulator unit (100) according to any of Claims 1 to 10;
a receiver (220) designed to receive optical signals;
wherein the modulator unit (100) is arranged to emit the output signal (118) in the direction of the receiver (220).

12. Satellite (300) having a modulator unit (100) according to any of Claims 1 to 10.

## Revendications

1. Unité de modulateur (100) destinée à moduler la polarisation d'un signal optique, comportant :
une source lumineuse (110) ;
un séparateur de composantes de polarisation (170) ;
un modulateur de phase (130) ;
un réflecteur (140) ;
la source lumineuse (110) étant conçue pour fournir en sortie un signal optique et l'émettre en tant que signal d'entrée (111) en direction du séparateur de composantes de polarisation (170), le signal optique contenant une première composante de polarisation ayant une première direction de polarisation et une deuxième composante de polarisation ayant une deuxième direction de polarisation ;
le séparateur de composantes de polarisation (170) étant conçu pour séparer la première composante de polarisation de la deuxième composante de polarisation et pour transmettre la première composante de polarisation par l'intermédiaire d'un premier sous-trajet optique (174) et la deuxième composante de polarisation par l'intermédiaire d'un deuxième sous-trajet optique (176) ;
un premier temps de propagation du signal étant associé au premier sous-trajet optique (174) et un deuxième temps de propagation du signal étant associé au deuxième sous-trajet optique (176), le premier temps de propagation du signal étant différent du deuxième temps de propagation du signal ;
le séparateur de composantes de polarisation (170) étant conçu pour injecter, en tant que résultat de la différence entre le premier temps de propagation du signal et le deuxième temps de propagation du signal, un décalage temporel entre la première composante de polarisation et la deuxième composante de polarisation, et pour transmettre la première composante de polarisation et la deuxième composante de polarisation au modulateur de phase (130) sur un trajet optique commun ;
le modulateur de phase (130) étant conçu pour moduler une première phase de la première composante de polarisation dans la première direction de polarisation et pour transférer la première composante de polarisation modulée au réflecteur (140) ;
le réflecteur (140) étant conçu pour rétroréfléchir à la fois la première composante de polarisation et la deuxième composante de polarisation en direction du modulateur de phase (130) et pour modifier ainsi la polarisation respective, de telle sorte que la première composante de polarisation présentant la première direction de polarisation passe dans la deuxième direction de polarisation et que la deuxième composante de polarisation présentant la deuxième direction de polarisation passe dans la première direction de polarisation ;
le modulateur de phase (130) étant conçu pour moduler une deuxième phase de la deuxième composante de polarisation rétroréfléchie dans la première direction de polarisation et pour transmettre la première composante de polarisation rétroréfléchie et la deuxième composante de polarisation rétroréfléchie au séparateur de composantes de polarisation (170) ;
le séparateur de composantes de polarisation (170) étant conçu pour éliminer le décalage temporel entre la première composante de polarisation rétroréfléchie et la deuxième composante de polarisation rétroréfléchie et pour fournir en sortie par l'intermédiaire d'un trajet optique commun la première composante de polarisation rétroréfléchie et la deuxième composante de polarisation rétroréfléchie sans décalage temporel ;
l'unité de modulateur (100) étant conçue pour fournir en sortie le signal optique ainsi modulé sous forme de signal de sortie modulé en polarisation (118).

2. Unité de modulateur (100) selon la revendication 1, le premier sous-trajet optique (174) présentant une première longueur de chemin optique et le deuxième sous-trajet optique (176) présentant une deuxième longueur de chemin optique, la première longueur de chemin optique étant différente de la deuxième longueur de chemin optique.

3. Unité de modulateur (100) selon la revendication 1 ou 2,
le séparateur de composantes de polarisation (170) comportant un premier séparateur de faisceau polarisant (172) et un deuxième séparateur de faisceau polarisant (178) ;
le premier sous-trajet optique (174) et le deuxième sous-trajet optique (176) étant agencés entre le premier séparateur de faisceau polarisant (172) et le deuxième séparateur de faisceau polarisant (178).

4. Unité de modulateur (100) selon l'une quelconque des revendications précédentes,
le modulateur de phase (130) comportant un cristal (135) qui est conçu pour être soumis à une tension électrique et pour modifier ainsi son indice de réfraction, cela ayant pour effet de modifier la phase de la première composante de polarisation et/ou de la deuxième composante de polarisation du signal optique.

5. Unité de modulateur (100) selon la revendication 4, l'unité de modulateur (100) étant conçue pour faire varier dans le temps la tension électrique appliquée au cristal (135).

6. Unité de modulateur (100) selon l'une quelconque des revendications précédentes,
une valeur de la première phase de la première composante de polarisation du signal d'entrée (111) dans la première direction de polarisation étant différente d'une valeur de la deuxième phase de la deuxième composante de polarisation du signal optique rétroréfléchi dans la première direction de polarisation.

7. Unité de modulateur (100) selon la revendication 6, le modulateur de phase (130) étant conçu pour modifier dans le temps une différence entre la première phase et la deuxième phase.

8. Unité de modulateur (100) selon l'une quelconque des revendications précédentes,
la source lumineuse (110) étant conçue pour fournir en sortie de la lumière ayant un mode optique défini.

9. Unité de modulateur (100) selon l'une quelconque des revendications précédentes,
l'unité de modulateur (100) étant conçue pour commander la source lumineuse (110) de manière à ce que la source lumineuse (110) émette des signaux optiques pulsés.

10. Unité de modulateur (100) selon l'une quelconque des revendications précédentes,
comportant en outre un séparateur de faisceau (120) disposé entre la source lumineuse (110) et le séparateur de composantes de polarisation (170) et conçu pour diriger au moins une partie du signal optique rétroréfléchi modulé en phase par le séparateur de composantes de polarisation (170) dans une direction prédéfinie.

11. Voie de transmission de signaux optiques (200), comportant
une unité de modulateur (100) selon l'une quelconque des revendications 1 à 10 ;
un récepteur (220) qui est conçu pour recevoir des signaux optiques ;
l'unité de modulateur (100) étant agencée pour émettre le signal de sortie (118) en direction du récepteur (220).

12. Satellite (300) comprenant une unité de modulateur (100) selon l'une quelconque des revendications 1 à 10.
